# EUROPÄISCHE PATENTSCHRIFT

(11) **EP 0 366 951 B1**
(45) Veröffentlichungstag und Bekanntmachung des Hinweises auf die Patenterteilung: **12.01.1994**
(21) Anmeldenummer: 89118287.5
(22) Anmeldetag: 03.10.1989
(51) Int. Cl.: B62D 1/18

(54) **Lenksäule für Kraftfahrzeuge mit in Achsrichtung verstellbarer Lenkwelle**
Steering column for motor vehicles with an axially adjustable steering axle
Colonne de direction pour véhicules à arbre de direction réglable axialement

(30) Priorität: 02.11.1988 DE 3837190
(43) Veröffentlichungstag der Anmeldung: 09.05.1990
(73) Patentinhaber: LEMFOERDER METALLWAREN AG., D-49441 Lemförde (DE)
(72) Erfinder: Bauch, Norbert, D-2847 Eydelstedt (DE); Nolte, Frank, D-4500 Osnabrück (DE)
(74) Vertreter: Bruse, Willy Hans Heinrich

(56) Entgegenhaltungen:
- US-A- 3 421 385
- US-A- 4 434 970
- PATENT ABSTRACTS OF JAPAN vol. 12, no. 381 (M-752)(3228) 12 Oktober 1988,& JP-A-61 134370 (FUJI KIKO CO LTD) 06 Juni 1988,

## Beschreibung

Die Erfindung betrifft eine Lenksäule für Kraftfahrzeuge mit in Achsrichtung verstellbarer Lenkwelle der Gattung nach dem Oberbegriff des Patentanspruches 1.

Eine Lenksäule mit diesen Gattungsmerkmalen ist aus der US-A-3421385 bekannt. Aus dieser Druckschrift ist zwar eine lediglich höhenverstellbare Lenksäule bekannt, jedoch wird ein Verriegelungsmechanismus beschrieben, der eine aus einer Verzahnung (62,63) und aus Rastelementen (64,65) mit einem Zahn (68) bestehende Rastung aufweist, wobei die Verzahnung aus zwei Abschnitten mit gleicher Zahnteilung besteht, die in axialer Richtung eine halbe Zahnteilung zueinander versetzt angeordnet sind. Außerdem ist jedem Abschnitt ein um eine Querachse (66,67) beweglich gelagertes Rastelement (64,65) so zugeordnet, daß der Zahn (68) eines Rastelements auf einem Zahnkopf des zugehörigen Abschnittes liegt, wenn der Zahn (68) des anderen Abschnittes voll eingerastet ist.

Vorschläge zur formschlüssigen Rastung des verstellbaren Teils einer längenverstellbaren Lenksäule in einem an der Karosserie festen Stützlager mit einer Verzahnung an dem einen, meistens an dem verstellbaren Teil und mit einem über eine Betätigungsvorrichtung eventuell gegen die Wirkung einer die Rastung in Riegelstellung belastenden Feder beweglichen Rastelement, welches wenigstens einen Zahn, eventuell aber auch mehrere Zähne, aufweist, an dem anderen Teil sind ebenfalls bekannt. Diese bekannten formschlüssigen Rastungen aus ineinandergreifenden Verzahnungen an axial gegeneinander verstellbaren Teilen sind jedoch nur in endlichen Positionen einstellbar. Ihr Vorteil liegt in der rastenden Verriegelung, so daß große Kräfte in axialer Richtung übertragen werden können. Formschlüssige Rastungen sind in längenverstellbaren Lenksäulen zum Auffangen großer Crash-Kräfte zu bevorzugen. Ein wesentlicher Nachteil formschlüssiger Rastungen bekannter Art ist die bei längenverstellbaren Lenksäulen nicht zu vermeidende Stellung "Kopf-auf-Kopf" der ineinandergreifenden Verzahnung an den beiden in axialer Richtung gegeneinander verstellbaren Teilen. Selbst bei spitz ausgeführten Zahnköpfen kann eine solche Stellung, in der die Verriegelung nicht gewährleistet werden kann, nicht vermieden werden. In einem solchen Falle ist eine Verriegelung und damit eine definierte Einrastung nur durch erneuten Druck auf das verstellbare Teil, daß heißt zum Beispiel auf das Lenkrad, zu erreichen. Dadurch entstehen gegebenenfalls negative Wirkungen, die im Hinblick auf die Sicherheit in einem Kraftfahrzeug inakzeptabel sind. Nach dem vermeintlichen Verriegeln einer neu eingestellten Position stellt sich ein Hub mit halber Teilung der Verzahnung der Rastelemente ein, der dem Fahrer des Kraftfahrzeugs einen Freigang suggeriert, der als Fehlfunktion gedeutet werden könnte. Die "Kopf-auf-Kopf-Stellung" bei einem unmittelbar anschließend erfolgenden Crash kann zum Durchrutschen der Verzahnung führen, weil aufgrund der Trägheiten aller am Einrasten beteiligten Bauelemente keine nennenswerte Hubbewegung zum Verriegeln erfolgt.

Aufgabe der Erfindung ist die Ausbildung einer möglichst einfachen aber stabilen formschlüssigen Rastung mit den Gattungsmerkmalen in der Weise, daß ein mit großer Sicherheit wirksamer formschlüssiger Zahneingriff zur Übertragung großer Axialkräfte auch bei einer "Kopf-auf-Kopf-Stellung" einzelner Zahnelemente erreicht wird.

Zur Lösung dieser Aufgabe wird erfindungsgemäß eine Ausbildung mit den Merkmalen nach dem Kennzeichen des Patentanspruches 1 vorgeschlagen.

Die Hinterkeilung der Rastelemente durch zwei Keile mit einem selbsthemmenden Keilwinkel führt zu einem sicheren, große Axialkräfte übertragenden Zahneingriff in jeder beliebigen Lage. Zwischen Grenzstellungen, bei denen entweder die Verzahnung eines Rastsegments voll eingerastet und die Verzahnung des anderen Rastsegments mit den Zahnköpfen des zugehörigen Abschnittes der Verzahnung am Mantelrohr liegt, sind unendlich viele Zwischenstellungen möglich, bei denen die Verzahnungen der beiden Rastsegmente mehr oder weniger tief in die Verzahnung am Mantelrohr eingreifen und sich an den Zahnflanken abstützen, wobei diese Abstützung in den beiden Abschnitten auf gegenüberliegenden Zahnflanken erfolgt. Wenn sich also die Verzahnung des einen Rastelementes mit der linken Flanke an der Verzahnung auf dem Mantelrohr abstützt, dann stützt sich die Verzahnung des anderen Rastelelementes mit der rechten Flanke an der Verzahnung des zugehörigen Abschnittes auf dem Mantelrohr ab. Hieraus resultiert eine Verriegelung der axial gegeneinander verstellbaren Teile ohne merkbare Teilung.

Auf der Zeichnung sind Ausführungsbeispiele der Erfindung dargestellt. Es zeigen:
- Figur 1: einen Längsschnitt in einer Achsebene durch ein Ausführungsbeispiel und
- Figur 2: einen gegenüber Figur 1 im Maßstab vergrößerten Längsschnitt in einer Achsebene durch ein abgeändertes Ausführungsbeispiel.

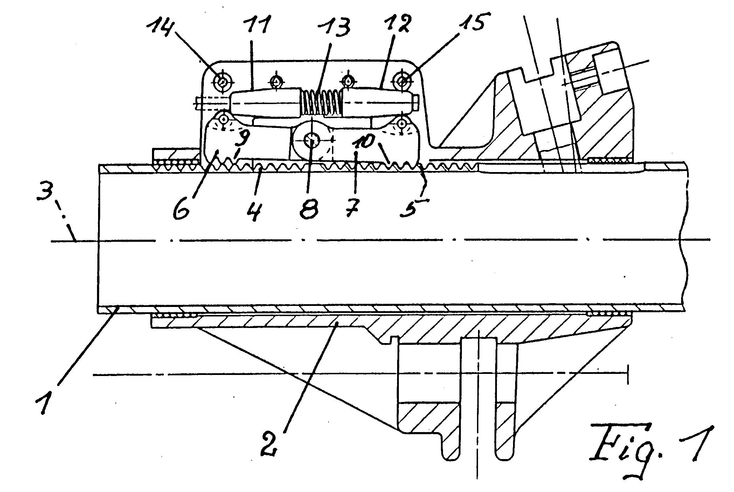

Auf der Zeichnung ist mit 1 ein drehfest angeordnetes Mantelrohr bezeichnet, welches in einem an der Karosserie festen Stützlager 2 in Richtung der Achse 3 verstellbar ist. Zur Verriegelung der eingestellten Lage des Mantelrohres 1 gegenüber dem Stützlager 2 ist auf einem Teilbereich des Umfanges des Mantelrohres 1 eine Verzahnung in Abschnitten 4 und 5 vorgesehen. Beide Verzahnungsabschnitte 4 und 5 weisen eine Verzahnung gleicher Teilung auf, sind jedoch um eine halbe Zahnteilung in Achsrichtung versetzt zueinander angeordnet. Jedem Verzahnungsabschnitt 4 und 5 ist ein Rastelement 6 bzw. 7 zugeordnet, die im Falle des Beispieles auf einer gemeinsamen Achse 8, welche quer zur Achse 3 liegt, beweglich sind. Jedes Rastelement 6 bzw. 7 weist wenigstens einen Zahn 9 bzw. 10, vorteilhaft jedoch mehrere Zähne mit einer Teilung entsprechend der Verzahnung in den Abschnitten 4 und 5 auf, wobei der Abstand der Verzahnungen 9 und 10 jedoch einem geraden Vielfachen der Zahnteilung in den Abschnitten 4 und 5 entspricht. Auf der Außenseite wirken beide Rastelemente 6 und 7 mit Keilkörpern 11 und 12 zusammen, deren Keilwinkel eine selbsthemmende Neigung haben und die in Richtung der Verriegelungsstellung durch eine Feder 13 belastet sind, welche sich einerseits gegen den Keilkörper 11 und andererseits gegen den Keilkörper 12 abstützt. Beide Keilkörper 11 und 12 sind durch eine auf der Zeichnung nicht dargestellte Betätigungsvorrichtung unter Überwindung der Kraft der Feder 13 gegeneinander drückbar, so daß sie eine Schwenkbewegung der Rastelemente 6 und 7 um die Achse 8 ermöglichen. Zur Verminderung der Reibung zwischen den Rastelementen 6 und 7 einerseits und den Keilkörpern 11 und 12 andererseits können an den Rastelementen Rollen oder andere Mittel zur Verringerung der Reibung vorgesehen sein. Die Darstellung in der Figur 1 zeigt eine Grenzstellung, bei der die Zähne 9 des einen Rastelements 6 sich in einer "Kopf-auf-Kopf-Stellung'′ mit der Verzahnung in dem Abschnitt 4 am Mantelrohr 1 befindet. Durch die Versetzung der beiden Verzahnungsabschnitte 4 und 5 in Achsrichtung um eine halbe Zahnteilung greift jedoch die Verzahnung 10 an dem anderen Rastelement 7 wenigstens teilweise in die Verzahnung des Abschnittes 5 ein. Umgekehrt wird die Verzahnung 9 in die Verzahnung des Abschnittes 4 bei einer "Kopf-auf-Kopf-Stellung" der Verzahnung 10 und der Verzahnung 5 eingreifen, so daß immer ein Zahneingriff zur Erzielung einer formschlüssigen Rastung erreicht wird.

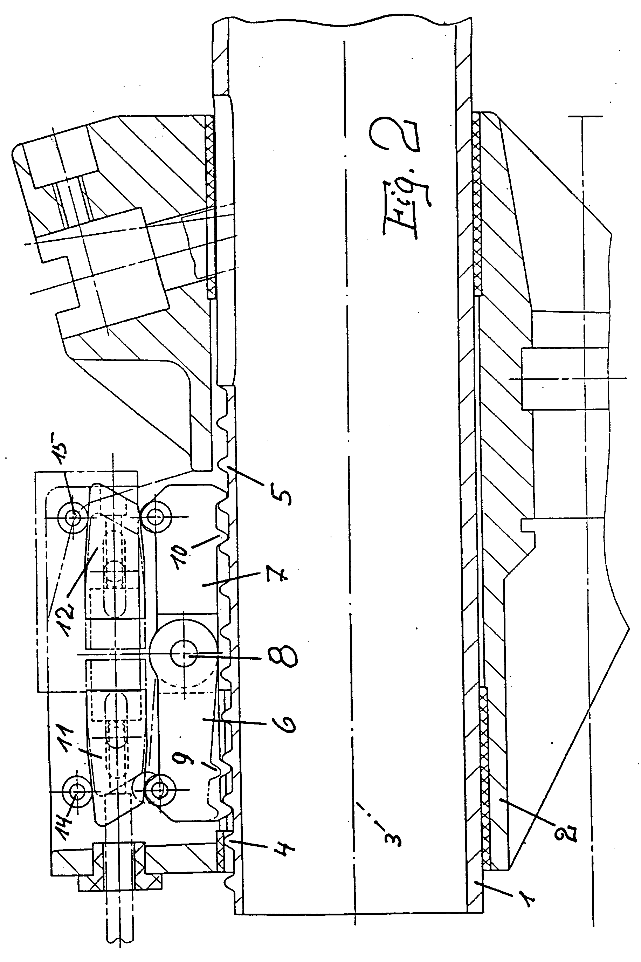

Das Ausführungsbeispiel in Figur 2 zeigt gegenüber der Figur 1 eine Ausbildung, bei der jeder zweite Zahn der Verzahnung in den Abschnitten 4 und 5 bzw. der Verzahnung 9 und 10 an den Rastelementen 6 und 7 fehlt. Daraus ergeben sich Grenzstellungen, bei der die Verzahnung 10 eines Rastelements 7 voll eingerastet ist, falls die Verzahnung 9 an dem anderen Rastelement 6 sich in einer "Kopf-auf-Kopf-Stellung" mit der Gegenverzahnung befindet und umgekehrt. Dazwischen sind unendlich viele Zwischenstellungen möglich. In diesen Zwischenstellungen findet stets eine vollständige Flankenabstützung der ineinandergreifenden Verzahnungen statt. Ausgenommen in den Grenzstellungen, von denen eine in der Zeichnung dargestellt ist, findet in allen Zwischenstellungen eine Zahnflankenberührung der Verzahnungen 9 und 10 auf sich gegenüberliegenden Seiten statt, das heißt, bei einer Flankenberührung der Verzahnung 9 auf der linken Seite findet eine Flankenberührung der Verzahnung 10 auf der rechten Seite statt. Eine Ausbildung entsprechend dem Beispiel in Figur 2 bewirkt, daß durch den stets vollständigen Zahneingriff der Verzahnung wenigstens eines Rastelements keine hohen Belastungen der Zahnflanken auftreten und eine festigkeitsgerechte Dimensionierung mit relativ flachen, am Zahnkopf mit einer gewissen Breite ausgestatteten Verzahnungen möglich ist. Auch bei diesem Ausführungsbeispiel ist eine Hinterkeilung der Rastelemente 6 und 7 durch Keilkörper 11 und 12 vorgesehen, die durch ein gemeinsames Betätigungsorgan gegeneinander unter Überwindung einer Feder zurückziehbar sind, um den Rastelementen 6 und 7 eine Schwenkbewegung um die Achse 8 zu ermöglichen. In der auf der Zeichnung dargestellten Verriegelungsstellung hintergreifen die Keilkörper 11 und 12 Rollen an den Rastelementen 6 und 7, wobei sie sich andererseits an fest angeordneten Widerlagern 14 und 15 abstützen, die auch in dem Ausführungsbeispiel entsprechend Figur 1 zu erkennen sind.

Bei einer Ausbildung nach dem Beispiel in der Figur 2 können die Verzahnungen in den Abschnitten 4 und 5 auf gleicher Zahnteilung angeordnet sein, weil durch das Entfernen jedes zweiten Zahnes ein Zwischenraum geschaffen wird, der größer ist als das Maß der Versetzung nach dem Beispiel in Figur 1.

## Patentansprüche

1. Verstellbare Lenksäule für Kraftfahrzeuge mit formschlüssiger Rastung zwischen einem drehfest gelagerten Mantelrohr (1) und einem karosseriefesten Stützlager (2), wobei die Rastung aus einer Verzahnung und beweglichen Rastelementen (6,7) mit jeweils wenigstens einem Zahn (9,10) besteht, wobei die Verzahnung aus wenigstens zwei Abschnitten (4,5) mit gleicher Zahnteilung besteht, die in axialer Richtung eine halbe Zahnteilung zueinander versetzt angeordnet sind, und wobei jedem Abschnitt (4,5) ein um eine Querachse (8) beweglich gelagertes Rastelement (6,7) zugeordnet ist, dadurch gekennzeichnet, daß die Lenksäule eine in Achsrichtung verstellbare Lenkwelle aufweist, daß die Verzahnung am Mantelrohr und die Rastelemente am Stützlager verankert sind, und daß beide Rastelemente (6,7), deren Zähne in Achsrichtung des Mantelrohrs (1) einen Abstand voneinander aufweisen, der einem geraden Vielfachen der zahnteilung entspricht, auf gemeinsamer Achse (8) gelagert sind und mit Keilkörpern (11,12) zusammenwirken, die in Richtung der Raststellung durch eine sich gegen beide Keilkörper (11,12) abstützenden Feder (13) belastet sind.

2. Lenksäule nach Anspruch 1, dadurch gekennzeichnet, daß der Zahnabstand der Verzahnung in den Abschnitten (4,5) auf dem Mantelrohr dem Zweifachen der Zahnteilung entspricht.

3. Lenksäule nach Anspruch 2, dadurch gekennzeichnet, daß an den Rastelementen (6,7) eine Verzahnung ausgebildet ist, bei der der Zahnabstand dem Zweifachen der Zahnteilung entspricht.

## Claims

1. Adjustable steering column for motor vehicles with positive latching between a non-rotatably supported enclosing tube (1) and a body-fixed one-direction thrust bearing (2), the latching device comprising a toothing and movable detent elements (6, 7) each having at least one tooth (9, 10), the toothing comprising at least two portions (4, 5) of identical tooth pitch which are disposed offset in an axial direction by half a tooth pitch relative to one another, and a detent element (6, 7) which is supported movably about a transverse axis (8) being associated with each portion (4, 5), characterized in that the steering column has an axially adjustable steering shaft, that the toothing is anchored on the enclosing tube and the detent elements are anchored on the one-direction thrust bearing, and that the two detent elements (6, 7), whose teeth in an axial direction of the enclosing tube (1) have a spacing apart from one another which corresponds to a straight multiple of the tooth pitch, are supported on a common axis (8) and cooperate with key elements (11, 12) which are loaded in the direction of the interlocked position by a spring (13) which is supported against the two key elements (11, 12).

2. Steering column according to claim 1, characterized in that the tooth spacing of the toothing in the portions (4, 5) on the enclosing tube corresponds to two times the tooth pitch.

3. Steering column according to claim 2, characterized in that a toothing is constructed on the detent elements (6, 7), the tooth spacing of said toothing corresponding to two times the tooth pitch.

## Revendications

1. Colonne de direction réglable pour véhicules automobiles comportant un encliquetage opérant par süreté de forme entre un tube enveloppe (1) monté bloqué en rotation et un palier d'appui (2) solidaire de la carrosserie, l'encliquetage étant composé d'une denture et d'éléments d'encliquetage mobiles (6, 7) comportant chacun au moins une dent (9, 10), la denture étant composée d'au moins deux segments (4, 5) de même pas de denture, qui sont décalés l'une par rapport à l'autre d'un demi-pas de denture en direction axiale à un élément d'encliquetage (6, 7) monté pour pivoter autour d'un axe transversal (8) qui est associé à chaque segment (4, 5), caractérisée en ce que la colonne de direction comprend un arbre de direction mobile en direction axiale, en ce que la denture est ancrée au tube enveloppe et les éléments d'encliquetage au palier support, et en ce que les deux éléments de verrouillage (6, 7) dont les dents présentent un écartement mutuel, mesuré dans la direction axiale du tube enveloppe (1), qui correspond à un multiple pair du pas de denture, sont montés sur un axe commun (8) et coopèrent avec des corps (11, 12) en forme de coin qui sont chargés dans le sens d'encliquetage par un ressort (13) qui prend appui sur les deux corps (11, 12) en forme de coin.

2. Colonne de direction selon la revendication 1, caractérisée en ce que l'écartement mutuel des dents de la denture dans les deux segments (4, 5) prévus sur le tube enveloppe correspond au double du pas de denture.

3. Colonne de direction selon la revendication 2, caractérisée en ce que, sur les éléments d'encliquetage (6, 7), est formée une denture dans laquelle l'écartement des dents correspond au double du pas de denture.
